# EUROPEAN PATENT SPECIFICATION

(11) **EP 3 523 484 B1**
(45) Date of publication and mention of the grant of the patent: **10.03.2021**
(21) Application number: 17859751.4
(22) Date of filing: 09.10.2017
(51) Int. Cl.: E02F 3/28, E02F 9/26, G01D 5/14, G01D 11/30

(54) **ROTARY SENSOR ARRANGEMENT FOR MOUNTING TO A PIVOT ARM ARRANGEMENT AND METHOD FOR MOUNTING A ROTARY SENSOR ARRANGEMENT TO A PIVOT ARM ARRANGEMENT.**
DREHSENSORANORDNUNG ZUR MONTAGE AN EINER SCHWENKARMANORDNUNG UND VERFAHREN ZUR MONTAGE EINER DREHSENSORANORDNUNG AN EINER SCHWENKARMANORDNUNG
AGENCEMENT DE CAPTEUR ROTATIF DESTINÉ À ÊTRE MONTÉ SUR UN AGENCEMENT DE BRAS À PIVOT ET PROCÉDÉ DE MONTAGE D'UN AGENCEMENT DE CAPTEUR ROTATIF SUR UN AGENCEMENT DE BRAS À PIVOT

(30) Priority: 10.10.2016 SE 1651327
(43) Date of publication of application: 14.08.2019
(73) Proprietor: ÅLÖ AB, 901 37 Umea (SE)
(72) Inventor: NYGREN, Tomas, 907 38 Umeå (SE)
(74) Representative: Zacco Sweden AB
(86) International application number: PCT/SE2017/050989
(87) International publication number: WO 2018/070921

(56) References cited:
- EP-B1- 2 645 069
- EP-B1- 2 645 069
- US-A- 5 627 467
- US-A- 5 657 544
- US-A1- 2003 112 003
- US-A1- 2005 058 530
- US-A1- 2014 119 872

## Description

### TECHNICAL FIELD

The present invention relates to a sensor arrangement for a pivoting arm arrangement, a pivoting arm arrangement comprising such a sensor arrangement, and a heavy vehicle with such a pivoting arm arrangement. The invention present invention even further relates to a method for mounting a rotary sensor arrangement according to the invention to a pivoting arm arrangement.

### BACKGROUND ART

Heavy vehicles using working tools, such as front loaders, agriculture vehicles, tractors or similar are often equipped with pivoting arm arrangements for holding and working with said working tools. For such vehicles, the positions of the pivoting arm members of such an arrangement, and the working tool mounted to the pivoting arm arrangement are often of importance for a driver or operator. There are several occasions and operations where this kind of positional information is useful and important, such as automated processes, operations with low visibility, or for weighing loads or other. If an operator for example wants to position a working tool at a specific location with a specific alignment, it may not always be possible to visually see the exact position and alignment of the working tool and the pivoting arm member in use.

To solve these types of situations different types of sensor arrangements may be used to attain the positions of the elements of the pivoting arm arrangement holding the working tool. Such sensor arrangements may be situated at the pivot points of the pivoting arm arrangements, at driving devices such as hydraulic cylinders and pistons, or other. Different types of sensors may also be used to attain the positional information in various ways depending on the type of working tool and pivoting arm arrangement where it is needed.

US2014/0119872 discloses a front loader provided with a sensor which is positioned in a cavity on the loader, and an actuating device is further provided which is connected to the sensor and which extends in the cavity.

US 6,918,237 describe a sensor arrangement for a combine harvester wherein the sensor arrangement is arranged at the end of the pivot shaft of the pivoting arm arrangement. The sensor arrangement reads the rotational displacement of the pivoting arm in relation to the chassis to thereby determine the angle and hence the position of the pivoting arm. The readout from the sensor is provided by means of a transfer shaft which is arranged in a slit in the end of the pivot shaft to translate the relative movement of the pivot shaft in relation to the pivoting arm.

There are however drawbacks with this solution. The mechanical interaction between the transfer shaft and the slit in the pivot shaft may be compromised over time as mechanical wear may degenerate the fit of the two elements. Such mechanical degradation and wear is common for heavy vehicle handling heavy loads as the forces acting on the equipment are usually quite large. Furthermore, vibrations leading to a slow but steady fatigue may also cause such issues even if the loads handled by the working tool are low. The sensor being dependent on the slit in the pivot shaft further provides a situation where the sensor arrangement requires a certain design for the pivot shaft of the pivoting arm arrangement. Therefore it may not be possible to mount this sensor arrangement to another pivoting arm arrangement having another design. If a person owning a vehicle with a pivoting arm arrangement wants to implement such a sensor arrangement at a later point in time after acquiring the vehicle, it may not be possible to do so.

There is therefore a need for an improved sensor arrangement which overcomes the problems of prior art.

### SUMMARY OF THE INVENTION

The object of the present invention is to provide a rotary sensor arrangement for pivoting arm arrangements wherein the pivoting of said arm arrangements may be read in an accurate and reliable manner. More specifically the object of the invention is to provide a rotary sensor arrangement which may be mounted to a pivoting arm arrangement at a later occasion than the assembly of the pivoting arm arrangement. A further object of the invention is to provide a rotary sensor arrangement which may be mounted to a plurality of pivoting arm arrangements having separate designs. An even further object of the invention is to provide a pivoting arm arrangement with such a rotary sensor arrangement, and a heavy vehicle, such as a tractor, with such a pivoting arm arrangement.

These objects are achieved by the rotary sensor arrangement according to claim 1, the pivoting arm arrangement according to claim 9 and the heavy vehicle according to claim 10. Further advantages of the invention are described with reference to the dependent claims. According to a first aspect of the invention a rotary sensor arrangement for mounting to a pivot arm arrangement is provided. The pivoting arm arrangement comprises a fixed arm member and a pivoting arm member, the pivoting arm member being arranged to pivot about a pivot shaft, which is rotationally fixed to the fixed arm member. The rotary sensor arrangement is arranged to be mounted at an end portion of the pivot shaft, the sensor arrangement comprises a sensor arm member comprising a base and an arm, the base being arranged to rotate about the pivot shaft wherein the arm, extending away from the base is rotationally coupled to the pivoting arm member. The rotary sensor arrangement further comprises at least one sensor device arranged at the base of the sensor arm member, and a sensor element, arranged rotationally fixed to the fixed arm member along an axis of rotation extending through the elongation of a centre of the pivot shaft. The rotary sensor arrangement further comprises an adaptor element, wherein the sensor element is attached rotationally fixed to the axis of rotation by means said adaptor element. The at least one sensor device is arranged to read the relative rotational displacement of the sensor element with regards to the sensor device in a non-contact manner.

This has the advantage that a that a rotary sensor arrangement may be provided to the pivoting arm arrangement wherein the at least one sensor device may read the rotational displacement of the sensor element with regards to the at least one sensor device in a non-contact manner and thereby directly attain the corresponding rotational displacement of the fixed arm member with regards to the pivoting arm member, about an axis of rotation being the pivot shaft. As the at least one sensor device reads the rotational displacement, i.e. the pivoting of the pivoting arm member in a non-contact manner, the sensor arrangement will provide an accurate and reliable output, not affected by mechanical wear. An advantage with having at least one sensor device, preferably being two sensor devices, is that a plurality of sensor devices provides redundancy in regards of operation, which in turn provides a reliable and secure rotary sensor arrangement. Furthermore, as the sensor element is mounted to the pivoting arm arrangement by means of an adaptor element, the rotary sensor arrangement is easy to modify for a plurality of pivoting arm arrangements with various designs. This is advantageous as modification to the rotary sensor arrangement may be performed at a low cost without substitution of the entirety of the rotary sensor arrangement if a new and/or different design of a pivoting arm arrangement is in need of a rotary sensor arrangement according to the invention. The mounting of the sensor arrangement by means of the adaptor element further has the advantage that mounting to a pivoting arm arrangement is also possible post-assembly of the pivoting arm arrangement as the adaptor is designed to be able to fit to various types of pivoting arm arrangements. This is beneficial as a person owning for example a vehicle with a pivoting arm arrangement might not know at the time of attaining said vehicle if he/she has the need for a sensor arrangement. The possibility to mount the sensor arrangement at a later point in time than the assembly of the vehicle may thus provide cost effective vehicles where the cost of a sensor arrangement is not wasted.

According to another aspect of the invention, the adaptor element is an essentially disc shaped element comprising a circumferential flange and an end portion with a threaded recess and wherein the sensor element is integrated in a screw, which is arranged to be threaded to the threaded recess.

This has the advantage that the sensor element may be manufactured as a standardized element which is usable for several types of adaptor elements having different designs. The sensor element incorporated in the screw is further easy to mount to the rotary sensor arrangement as the mounting procedure is performed fast and easily by means of threading the screw into the threaded recess.

According to yet another aspect of the invention the circumferential flange comprises inner threads, arranged at an inner circumference of the circumferential flange, wherein the inner threads are arranged to be threaded to the pivot shaft.

This has the advantage that the adaptor element is easily mounted to the pivot shaft while at the same time ensuring that the sensor element is mounted in the centre of the axis of rotation of the pivot shaft. As pivot shafts holding two pivoting arms together often have existing threads, for receiving a nut or similar to act as an axially locking element for the pivot shaft, the threads of the adaptor element are ready to use with a plurality of pivoting arm arrangement designs. If however the pivoting shaft does not have existing threads prior to mounting of a rotary sensor arrangement, suitable threads may the threaded to an end portion of the pivot shaft as well.

According to a further aspect of the invention, the circumferential flange further comprises a plurality of holes, through which additional fastening elements may be used for attaching the adaptor element to the fixed arm member.

This has the advantage that the adaptor element is very versatile and may easily be used for pivot shafts not having existing threads, and/or not protruding through the fixed arm member depending on the design of the pivoting arm arrangement. For such cases the adaptor element is easily mounted to the fixed arm member, in a position aligning the sensor element along the axis of rotation of the pivot shaft, by means of using additional fastening elements such as screws. This provides an even further modifiable and versatile rotary sensor arrangement.

According to an even further aspect of the invention, the base of the sensor arm member further comprises a hole in which the sensor element may be situated and rotate freely within said hole.

This has the advantage that the sensor element is well protected from potential sources of incoming damage or harm by the surrounding sensor arm. Furthermore, by situating the sensor element within in a hole of the sensor arm, the sensor element is able to provide a 360° reading for the sensor device, providing an easy to synchronize sensor arrangement not being dependant on the sensor element being mounted at a specific angle with regards to the sensor device.

According to another aspect of the invention the adaptor element is coupled to the hole of the sensor arm member by means of a connecting element.

This has the advantage that the sensor arm member and the adaptor element may be mounted in such a way that they both accurately align to the axis of rotation of the pivot shaft, and in relation to each other. The connecting element, which may be an element such as a bushing, a bearing, a shim element, or other, provides a mechanically reliable mounting and alignment which ensures that the rotary sensor arrangement provides an accurate reading over time.

According to yet another aspect of the invention the at least one sensor device is at least one Hall sensor and the sensor element comprises at least one magnet for providing a magnetic field, wherein the Hall sensor utilizes changes in said magnetic field to attain the relative rotational displacement of the sensor device in relation to the sensor element.

This has the advantage that the an accurate and reliable sensor device is provided which may read the rotational displacement with high accuracy at low input values, while at the same time also being reliable over time as the readings of the fluctuations of the magnetic field may be performed in a non-contact manner which reduces potential wear of the sensor device and the sensor element.

According to a further aspect of the invention the at least one sensor device is at least one optical sensor and the sensor element comprises a plurality of markers, wherein the optical sensor utilizes said markers to attain the relative rotational displacement of the sensor device in relation to the sensor element.

This has the advantage that the a cheap and easy to use sensor device is provided, which sensor device also reads the rotational displacement in a non-contact manner which reduces potential wear of the sensor device and the sensor element.

According to an even further aspect of the invention a pivoting arm arrangement is provided. The pivoting arm arrangement, being for example a an implement for a tractor, comprises at least one fixed arm member and at least one pivoting arm member, the pivoting arm member being arranged to pivot about a pivot shaft, which is rotationally fixed to a fixed arm member. The pivoting arm arrangement further comprises at least one rotary sensor arrangement according to the invention.

This has the advantage that a pivoting arm arrangement is provided which by means of the at least one rotary sensor arrangement may provide a rotational position of the pivoting arms when being used. This is beneficial for a variety of pivoting arm arrangements, such as pivoting arm arrangements used in automated processes, where low visibility may be a concern or other.

According to yet another aspect of the invention a heavy vehicle, such as a tractor, is provided, the vehicle comprising a pivot arm arrangement with at least one rotary sensor arrangement according to the invention.

This has the advantage that a vehicle, such as a tractor, which may utilize a variety of heavy working tools such as lifting equipment, agriculture tools or similar by means of a pivoting arm arrangement coupled to the vehicle also provides a user of said vehicle with accurate and reliable positioning readings for said equipment. This is beneficial as the work performed with such a tractor may be performed with high precision and small tolerances.

According to a further aspect of the invention a method for mounting a rotary sensor arrangement to a pivoting arm arrangement is provided. The pivoting arm arrangement comprises at least one fixed arm member and at least one pivoting arm member, each pivoting arm member being arranged to pivot about a pivot shaft, which is rotationally fixed to a fixed arm member. The sensor arrangement comprises a sensor arm member comprising a base and an arm, the base being arranged to rotate about the pivot shaft. The arm, extending away from the base, is rotationally coupled to the pivoting arm member. The sensor arrangement further comprises at least one sensor device arranged at the base of the sensor arm member, and a sensor element, to be arranged rotationally fixed to the fixed arm member along an axis of rotation extending through the elongation of a centre of the pivot shaft by means of an adaptor element. The at least one sensor device is arranged to read the relative rotational displacement of the sensor element with regards to the sensor device in a non-contact manner. The method comprises the steps of: a) identifying the specific design of the pivot shaft of the pivoting arm arrangement, b) choosing an adaptor element with a design suitable for the identified design of the pivot shaft, c) mounting the adaptor element to the pivot shaft, and d) mounting the additional elements of the rotary sensor arrangement to the adaptor element.

This has the advantage that a versatile method is provided, wherein the rotary sensor arrangement may be mounted to a large variety of pivoting arm arrangements having different types of designs. A further advantage is that the mounting method may be performed at any given time for pivoting arm arrangements which are in need of a rotary sensor arrangement. As the adaptor element may be manufactured in a wide variety of shapes to fit different types of pivoting arm arrangements, and be chosen based on the design and kind at hand, the rotary sensor arrangement may be mounted to the pivoting arm arrangements when they are already fully assembled. With the sensor element being held in its correct position by means of said adaptor element, the mothed is not reliant on the pivoting shaft having a specific design, and there is therefore not any need to substitute or alter said pivoting shaft. This is beneficial as after assembly mounting thereby is possible.

### BRIEF DESCRIPTION OF THE DRAWINGS

Below is a description of, as examples, embodiments of the invention with reference to the enclosed drawings, in which:
Figure 1 shows a schematic illustration of a tractor with a pivoting arm arrangement provided with a rotary sensor arrangement according to the invention,
Figure 2 shows parts of a pivoting arm arrangement and an exploded view of a rotary sensor arrangement according to the invention,
Figure 3 a-d shows cross-sectional schematic illustrations of adaptor elements with varying designs,
Figure 4 a-d shows cross-sectional schematic illustrations pivoting arm arrangements with pivot shafts of various designs, and
Figure 5 shows a flowchart of a method for mounting a rotary sensor arrangement to a pivoting arm arrangement according to the invention.

### DETAILED DESCRIPTION

Hereinafter different embodiments and examples of the invention will be described in detail. Reference numbers are not to be viewed as restrictive in relation to the scope of the protection given by the patent claims, only as assistance in understanding the various technical features of the invention.

As will be realized the invention can be modified in various ways without deviating from the scope of the claims, and aspects of the different embodiments may be combined to achieve a variety of combined technical features and embodiments. Hence, the description should be viewed as illustrative and not restrictive.

As should be obvious for a person skilled in the art, the different examples of the sensor arrangement and its individual parts described herein can be combined in various ways without deviating from the inventive concept or the scope of the protection set up by the enclosed patent claims.

According to a first aspect of the invention a rotary sensor arrangement 1 is provided. Said rotary sensor arrangement 1 is suitable for mounting on a pivoting arm arrangement 3, which comprises a fixed arm member 5 and a pivoting arm member 7, the pivoting arm member 7 being arranged to pivot about a pivot shaft 9, which is rotationally fixed to the fixed arm member 5. It should thereby be understood that the arm member defined as fixed is fixed in relation to the pivot shaft 9 and not necessarily rotationally fixed in other regards, or in relation to other part of the pivoting arm arrangement 3. A pivoting arm arrangement 3 may have a plurality of pivot shafts 9 with a plurality of pivoting arm members 7, 9 which are movable in relation to each other. One specific pivot arm member may therefore be viewed as both fixed and pivoting if it is arranged to several pivot shafts 9 wherein one is rotationally fixed to said arm member and the other is rotationally movable.

The rotary sensor arrangement 1 is arranged to be mounted at an end portion 11 of the pivot shaft 9. Herein it should be noted that the phrase at an end may be directly in abutment to said end portion 11, but may also be in the vicinity of said end portion 11. As one aspect of the invention is that the rotary sensor arrangement 1 is adaptable for mounting to pivoting arm arrangements 3 and pivot shafts 9 of various designs, the exact mounting may vary according to these different types of designs. This will be further explained in detail in the description. In general it should be noted that the rotary sensor arrangement 1 is to be mounted as close to the pivot shaft 9 as possible, and being aligned with an axis of rotation 13 about which the pivoting arm member 7 pivots when the pivoting arm member 7 pivots with regards to the fixed arm member 5.

The rotary sensor arrangement 1 further comprises a sensor arm member 15 comprising a base 17 and an arm member 19, the base 17 being arranged to rotate about the axis of rotation 13 wherein the arm member 19, extending away from the base 17 is rotationally coupled to the pivoting arm member 7. The rotary sensor arrangement 1 further comprises at least one sensor device 21, arranged at the base 17 of the sensor arm member 15, and a sensor element 23, arranged rotationally fixed to the fixed arm member 5 along the axis of rotation 13 extending through the elongation of a centre of the pivot shaft 9. The base 17 of the sensor arm member 15 may be fixedly arranged to the pivoting arm member 7 wherein it then may be completely free moving with regards to the fixed arm member 5. The sensor arm member 15 may also be hingedly coupled to the fixed arm member 5 by means of suitable fastening elements wherein the mounting to the pivoting arm member 7 only needs to hold the sensor arm member 15 rotationally fixed to the pivoting arm member 7. The at least one sensor device 21 may be a plurality of sensor devices 21 to provide redundancy which in turn provides a secure and reliable rotary sensor arrangement 1. Such redundancy is often a requirement for heavy tools and vehicles to be able to guarantee personal safety when using such machinery. The at least one sensor device 21 may be mounted to the base 17 of the sensor arm member 15 by means of fastening elements, formfitting, welding or other. Preferably the at least one sensor device 21 is mounted with fastening elements such as screws, to provide a sensor device 21 which is easy to remove if the need for maintenance or replacement of said device arises.

The rotary sensor arrangement 1 further comprises an adaptor element 25, wherein the sensor element 23 is attached rotationally fixed to the axis of rotation 13 by means of said adaptor element 25. The adaptor element 25 may easily be substituted with regards to its design to adapt the rotary sensor arrangement 1 to a wide variety of pivoting arm arrangement 3 comprising pivot shafts 9 of various designs and/or which are mounted to the pivoting arm arrangements 3 in different ways. By means of adapting the fitting to a pivoting arm arrangement 3 by means of purely modifying one element, being the adaptor element 25, the rotary sensor arrangement 1 may be modified in an easy and cost effective way. As the adaptor element 25 is a mechanical construction element, adapted to hold the sensor element 23 and fit to the fixed arm member 5 , it may easily be mass produced in a variety of designs and shapes to provide a flexible rotary sensor arrangement 1 which may be mounted to a variety of pivoting arm arrangement 3. Said mounting may be performed at a production line directly if it is established that the pivoting arm arrangement 3 in question is desired to have a rotary sensor arrangement 1 according to the invention. However, the flexibility of the exchangeable adaptor element 25 provides a rotary sensor arrangement 1 being well suited for mounting to post-assembled pivoting arm arrangement 3 especially.

The sensor device 21 is further arranged to read the relative rotational displacement of the sensor element 23 with regards to the sensor device 21 in a non-contact manner. Thereby mechanical wear of the at least sensor device 21 and the sensor element 23 is eliminated. The at least one sensor device 21 and the sensor element 23, which are crucial and delicate elements of the rotary sensor arrangement 1 for an accurate displacement reading of a pivoting arm arrangement 3, makes it important to be able to rely on those two components. It is therefore beneficial to have a non-contact sensor mechanism rather than a sensor mechanism relying on mechanical interaction. As should be obvious, the rotary sensor arrangement 1 further comprises electronics to operate the rotary sensor arrangement 1 and the sensor device 21 therein. Such elements and connection means for such are however left out of the disclosure of the invention as they should be realized as fully known technology.

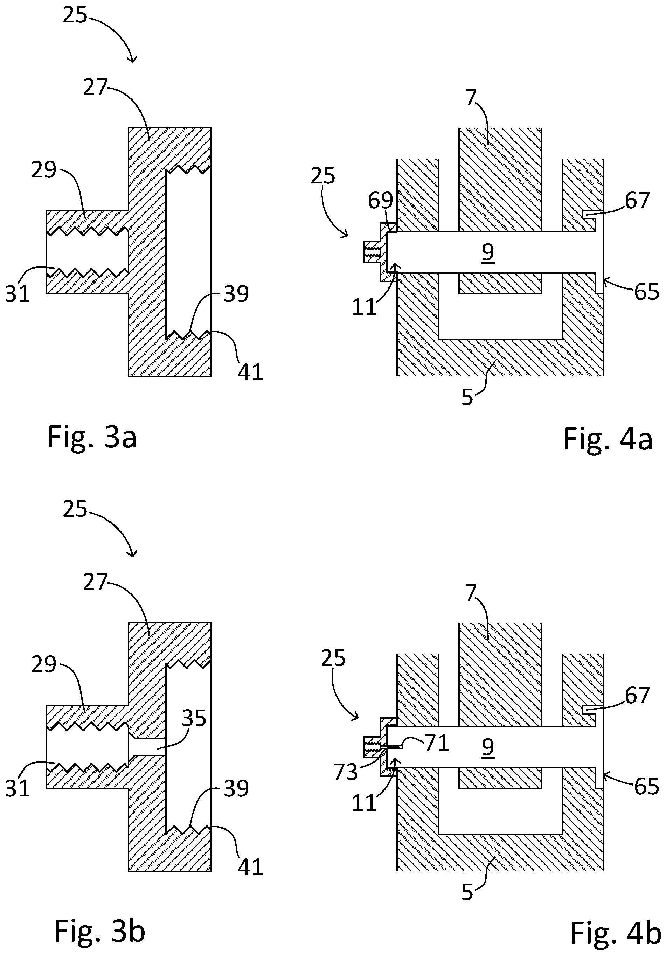

The adaptor element 25 may preferably be an essentially disc shaped element comprising a circumferential flange 27 and an end portion 29 with a threaded recess 31 wherein the sensor element 23 is integrated in a screw 33, which is arranged to be threaded into the threaded recess 31. The circumferential flange 27 of the adaptor element 25 may have various shapes to be fitted to various types of designs of different pivoting arm arrangements 3; this will be discussed in detail with reference to figures 3a-d and 4a-d. The substantial disc shape however makes the adaptor element 25 essentially flat which provides an adaptor element 25 which does not take up unnecessary space and volume when it is mounted on a pivoting arm arrangement 3. The circumferential flange 27 is arranged to preferably sit flush against the fixed arm member 5 to provide a mechanically reliable and accurate positioning of the sensor element 23. The adaptor element 25 is arranged to be mounted in such a way that the threaded recess 31 is aligned with the axis of rotation 13 of the pivot shaft 9 of the pivoting arm arrangement 3 to which it is being mounted. Thereby the screw 33 comprising the sensor element 23 may easily be threaded into said threaded recess 31 to in turn align the sensor element 23 in a position along the axis of rotation 13 of the pivot shaft 9. The threaded recess 31 may additionally comprise a through hole 35 in a bottom of said threaded recess 31, which through hole 35 may be used to accommodate an additional fastening element such a screw. Said screw may then be used to mount the adaptor element 25 at an end portion 11 of the pivot shaft 9, if said pivot shaft 9 comprises a threaded hole, which may the case if the pivot shaft is arranged to be axially locked by means of a screw. The adaptor element 25 may thereby utilize the existing design of the pivot shaft 9 of a pivoting arm arrangement 3 in an easy and effective manner. This, and other means of mounting, will be described in detail with reference to figures 3a-d and figures 4a-d.

Depending on the design of the fixed arm member 5 and the pivot shaft 9 of the pivoting arm arrangement 3, the pivot shaft 9 may not be in abutment with the adaptor element 25 when mounted. If such a case occurs, an additional element 37 such as a washer, a seal ring or a shim may additionally be arranged between the adaptor element 25 and the fixed arm member 5 when the adaptor element 25 is mounted. This may be performed to establish a proper fitting of the two components and also to compensate for potential gaps in the structure. If for example the pivot shaft 9 of the pivoting arm arrangement 3 in question extends out from the fixed arm member 5 to a large extent, said washer, seal ring or shim may be arranged to alleviate the resulting gap between the adaptor element 25 and the fixed arm member 5.

The circumferential flange 27 may further comprise inner threads 39, arranged at an inner circumference 41 of the circumferential flange 27, wherein the inner threads 39 are arranged to be threaded to the pivot shaft 9. This option may be of use if the pivot shaft 9 already has existing threads, which often is the case for pivot shafts 9 which are being axially locked within the pivoting arm arrangement 3 by means of a nut-like fastening element. It may also be of use on pivoting shafts 9 which do not have existing outer threads but wherein suitable threads may be implemented to the pivot shaft 9 by means of a threading tool.

The circumferential flange 27 may further comprise a plurality of holes 43, through which additional fastening elements may be used for attaching the adaptor element 25 to the fixed arm member 5. This may be useful for pivoting arm arrangements 3 which are designed in such a way that the adaptor element 25 is not easily mounted directly towards the end portion 11 of the pivot shaft 9. The may be the case for examples wherein the pivot shaft 9 does not extend out through the fixed arm member 5, or wherein it extend out through the fixed arm member 5 but may not easily receive the adaptor element 25. The adaptor element 25 may then be aligned with the centre of the threaded recess 31 along the axis of rotation 13 of the pivot shaft 9, arranged towards the fixed arm member 5 while maintaining said alignment and then mounted to the fixed arm member 5 by means of inserting additional fastening elements through said holes 43. Such additional fastening element may be fastening elements such as screws. For such cases additional holes are easily drilled in into the fixed arm member 5 wherein the screws may be threaded into said drilled holes. As should be realized, a very versatile adaptor element 25 is thereby provided which may easily be mounted to pivoting arm arrangements 3 of various different designs.

The base 17 of the sensor arm member 15 may further comprise a hole 45 in which the sensor element 23 may be situated and rotate freely within said hole 45. The hole 45 is arranged to accommodate the sensor element 23 without being in contact, wherein the sensor element 23 may freely rotate within said hole 45 but still be protected from potential impact or similar. The at least one sensor device 21 may then be arranged over or around said hole to provide a close distance to the sensor element 23. Thereby a high accuracy reading of the sensor element 23 by means of the at least one sensor device 21 may be achieved, wherein said reading may also be performed at a 360° angle all around the sensor element 21.

The adaptor element 25 may further be coupled to the hole 45 of the sensor arm member 15 by means of a connecting element 47. Said connecting element 47 may be a bushing, a bearing, a shim, or similar element comprising sliding surfaces to ensure an as frictionless as possible coupled movement. Such a coupling further keeps the alignment of the sensor arm member 15in place with regards to the sensor element 21. The sensor arm member 15 and the at least one sensor device 21 may then be securely aligned with regards to the sensor element 23 and at the same time being able to move freely in relation to each other.

The at least one sensor device 21 may be a Hall sensor and the sensor element 23 may comprise at least one magnet for providing a magnetic field. The Hall sensor utilizes changes in said magnetic field to attain the relative rotational displacement of the sensor device 21 in relation to the sensor element 23. The Hall effect is a known effect wherein the production of a voltage differs across an electrical conductor, transverse to an electric current in said conductor and a magnetic field perpendicular to the current. The sensor element 23 being at least one magnet thereby provides a magnetic field which originates from the sensor element 23 and is aligned with the axis of rotation 13 of the pivot shaft 9, due to being situated in such a way when mounted. When the at least one sensor device 21, being at least one Hall sensor, rotates around the magnet the relative changes of the magnetic field may be read by the at least one sensor device 21 to provide an accurate output signal describing the pivoting displacement of the fixed arm member 5 in relation to the pivoting arm member 7.

The at least one sensor device 21 may also be an optical sensor wherein the at least one sensor element 23 comprises a plurality of markers, wherein the optical sensor utilizes said markers to attain the relative rotational displacement of the sensor device 21 in relation to the sensor element 23. The markers may in this case be provided in the form of a raster, a gradient pattern or other. As markers for optical reading is relatively simple to manufacture, the manufacturing process of such a sensor element 23 is in turn easy and cost effective. A raster, a gradient or another optically readable pattern is also easy to modify if desirable. The readable pattern may be divided into sub-patterns or separate zones having individual patterns to allow the sensor device 21 to attain subsets of information regarding the pivoting of the pivoting arm arrangement 3 in an easy and efficient manner.

The invention further relates to a pivoting arm arrangement 3, such as an implement for a tractor, comprising at least one fixed arm member 5 and at least one pivoting arm member 7, each pivoting arm member 7 being arranged to pivot about a pivot shaft 9, which is rotationally fixed to a fixed arm member 5. The pivot arm arrangement 3 further comprises at least one rotary sensor arrangement 1 according to invention. The pivoting arm arrangement 3 may comprise any number of fixed arm members 5 and pivoting arm members 7, wherein a rotary sensor arrangement 1 is arranged the pivot shafts 9 where the angle of pivoting is a desired knowledge to have. If all pivot shafts 9 of a pivoting arm arrangement 3 are provided with rotary sensor arrangements 1, then the entirety of said arrangement 3 may be monitored with regards to the positions of the parts of said arrangement 3. As should be understood, the variations of features for a rotatory sensor arrangement 1 arranged to the pivoting arm arrangement 3 may vary according to the disclosure of the rotary sensor arrangement 1 as described within the patent application.

Even further the invention relates to a heavy vehicle 49, such as a tractor, wherein said vehicle comprises a pivoting arm arrangement 3 comprising a rotary sensor arrangement 1 according to the disclosure of the invention. As for the pivoting arm arrangement 3 described above, the described variations to the rotary sensor arrangement 1 and the pivoting arm arrangement 3 may also vary when being a part of said arrangements 1, 3 when mounted to said vehicle. The invention also provides a method for mounting a rotary sensor arrangement 1 to a pivoting arm arrangement 3. The pivoting arm arrangement 3 comprises a fixed arm member 5 and a pivoting arm member 7, the pivoting arm member 7 being arranged to pivot about a pivot shaft 9, which is rotationally fixed to the fixed arm member 5. The rotary sensor arrangement 1 comprises a sensor arm member 15 comprising a base 17 and an arm 19, the base 17 being arranged to rotate about the pivot shaft 9. The arm 19, extending away from the base 17, is rotationally coupled to the pivoting arm member 7. The rotary sensor arrangement 1 further comprises at least one sensor device 21 arranged at the base 17 of the sensor arm member 15, and a sensor element 23, to be arranged rotationally fixed to the fixed arm member 5 along an axis of rotation 13 extending through the elongation of a centre of the pivot shaft 9 by means of an adaptor element 25. The at least one sensor device 21 is arranged to read the relative rotational displacement of the sensor element 23 with regards to the sensor device 21 in a non-contact manner. The method comprises the steps of: a) identifying the specific design of the pivot shaft 9 of the pivoting arm arrangement 3, b) choosing an adaptor element 25 with a design suitable for the identified design of the pivot shaft 9, c) mounting the adaptor element 25 to the pivot shaft 9, and d) mounting the additional elements of the rotary sensor arrangement 1 to the adaptor element 25. A versatile method is thereby provided, wherein the rotary sensor arrangement 1 may be mounted to a large variety of pivoting arm arrangements 3 having different types of designs, due to using an adaptor element 25 to mount the sensor element 23. This also provides the possibility to perform the mounting method at any given time for pivoting arm arrangements 3 which are in need of a rotary sensor arrangement 1. That is, the rotary sensor arrangement 1 may be mounted to the pivoting arm arrangement 3 during assembly of the pivoting arm arrangement 3 but also post assembly. This is due to the adaptor element 25 eliminating the need to substitute or alter the pivot shaft 9 in any way, which might be needed for an already assembled pivoting arm arrangement 3 having a set design and wherein a rotary sensor arrangement 1 not having an adaptor element 25 and thus not providing flexibility with respect to the mounting. As have been previously known in the art, rotary sensor arrangements 1 have for example required special pivot shafts 9 with sensor means incorporated in said pivot shafts 9. Thus, to be able to mount such a sensor arrangement post assembly of a pivoting arm arrangement 3 have required to first substitute the pivot shaft 9 to a special pivot shaft with the right sensor means. Such an operation may be both time consuming and costly or even deemed as not possible. As the adaptor element 25 may be manufactured in a wide variety of shapes to fit different types of pivoting arm arrangements 3, and be chosen based on the design and kind of pivoting arm arrangement 3 at hand, the rotary sensor arrangement 1 may be mounted to the pivoting arm arrangements 3 when they are already fully assembled. With the sensor element 23 being held in its correct position by means of said adaptor element 25, the method is not reliant on the pivoting shaft 9 having a specific design, and there is therefore not any need to substitute or alter said pivoting shaft 9. This is beneficial as post assembly mounting thereby is possible. The method may however still be used during a manufacturing process as well, without deviating from the inventive concept of the invention.

### DETAILED DESCRIPTION OF THE DRAWINGS

Hereinafter different embodiments and examples of the invention will be described associated with the enclosed drawings. Reference numbers are not to be viewed as restrictive in relation to the scope of the protection given by the patent claims, only as assistance in understanding the drawings and the various technical features of the invention.

As will be realized the invention can be modified in various ways without deviating from the scope of the claims, and aspects of the different embodiments may be combined to achieve a variety of combined technical features and embodiments. Hence, the drawings and the description thereto should be viewed as illustrative and not restrictive.

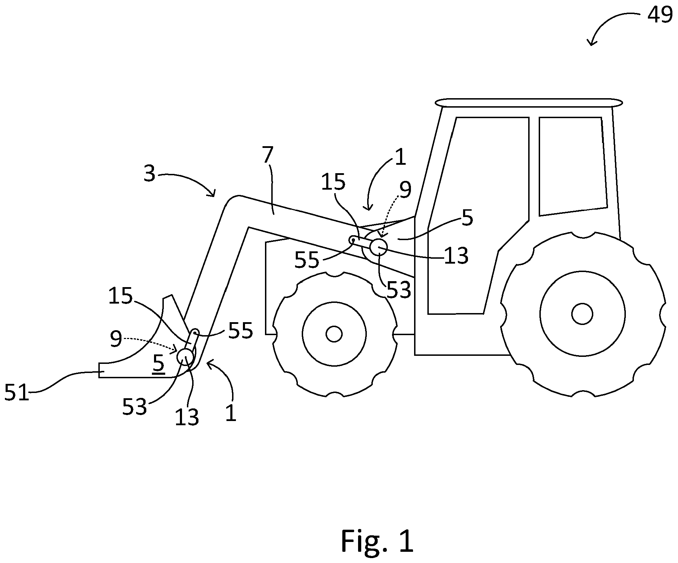

Figure 1 shows a schematic illustration of a heavy vehicle 49 with a pivoting arm arrangement 3, in the form of an implement, provided with two rotary sensor arrangements 1according to the invention. The pivoting arm arrangement 3 is arranged with an exchangeable working tool 51 which may be substituted for other working tools 51 for different working scenarios the vehicle 49 may be used for. As should be understood, the vehicle 49, pivoting arm arrangement 3 and the rotary sensor arrangements 1 depicted in figure 1 are shown in a very simplistic illustration, wherein a lot of unnecessary details are left out for simplicity. For example, a pivoting arm arrangement 3 in practice further comprises driving means, such as hydraulic cylinders and pistons for operating the movement of the working tool 51 by means of the pivoting arm arrangement 3. The pivoting arm arrangement 3 of this example is provided with two rotary sensor arrangements 1, one for each pivot shaft 9 of the pivoting arm arrangement 3. The rotary sensor arrangements 1 are arranged about the pivot shafts 9 connecting the pivot arm arrangement 3 to the vehicle 49 and the working tool 51. Each pivot shaft 9 is rotationally fixed towards one of the arm members, defining it as a fixed arm member 5, wherein parts of each rotary sensor arrangement 1 are arranged on said fixed arm member 5. It should be noted that the term arm members are used in a broad sense to describe an element with relative movement with regards to another arm about an axis of rotation 13 centred at a pivot shaft 9. For the illustration of figure 1, the working tool is therefore also to be viewed as a pivoting arm member 7 in this regard.

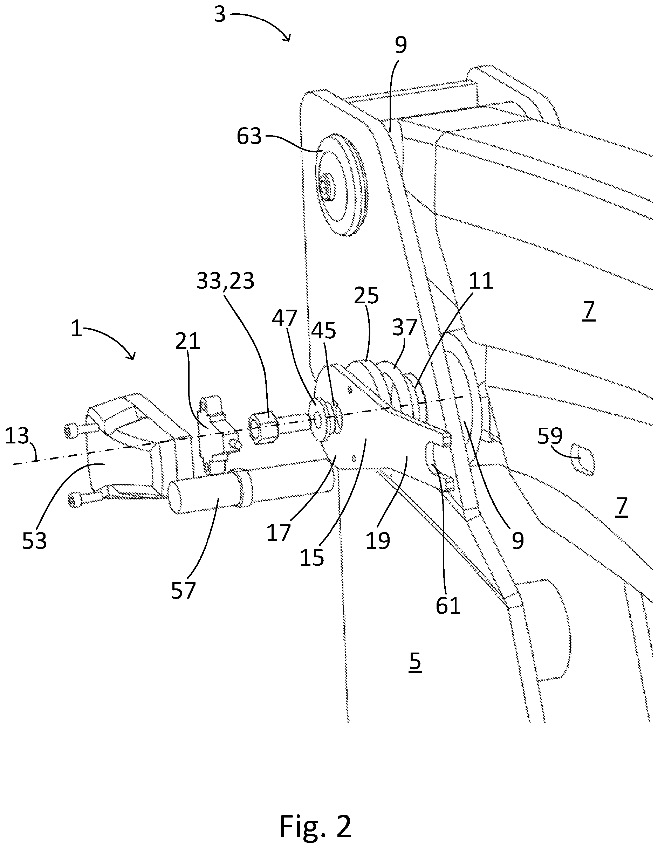

The rotary sensor arrangement 1 comprises a sensor arm member 15, which is shown to extend out from a housing 53 of the rotary sensor arrangement 1, being rotationally fixed to the pivoting arm member 7. The base of each sensor arm member is in this example covered by a body of the rotary sensor arrangement, wherein said base is arranged to freely rotate about the pivot shaft 9 connecting the fixed arm member 5 and the pivoting arm member 7, wherein the sensor arm member 15 is attached to the pivoting arm member 7 by means of a fastening element 55. Thereby when the pivoting arm member 7 pivots in relation to the fixed arm members 5, about the pivot shafts 9, the sensor arm members 15 follows this pivoting and may provide a direct reading of said pivoting by means of at least one sensor device which is situated within the housing 53 of the rotary sensor arrangement 1. The sensor device and other internal parts of the rotary sensor arrangement 1 will be described in more detail with reference to figure 2. By arranging rotary sensor arrangements 1 on all pivoting shafts 9 of the pivoting arm arrangement 3, the relative angles of the ingoing pivoting members may be known at all times by means of said rotary sensor arrangements 1, and thus the exact location and angle of the working tool 51 is known for a driver of the vehicle 49 by means of a suitable interface within the vehicle 49. The rotary sensor arrangement 1 according to the invention may of course also be arranged on vehicles, and used for working tools, of other types than those shown in figure 1. A pivoting arm arrangement may for example comprises a plurality of pivoting arm members wherein rotary sensor arrangements are arranged at each pivot shaft of said pivoting arm arrangement, without deviating from the inventive concept of the invention.

Figure 2 shows parts of a pivoting arm arrangement 3 and an exploded view of a rotary sensor arrangement 1 according to the invention. The pivoting arm arrangement 3 shown in figure 2 comprises a fixed arm member 5 and two pivoting arm members 7, moving parallel to each other. This is a common design for pivoting arm arrangements 3 and implements for heavy vehicles wherein the mechanical loads may be large. As the two pivoting arm members 7 are arranged to move parallel to each other only one rotary sensor arrangement 1 is needed to read the pivoting and thereby the angle defined by the arm members 5, 7 of the pivoting arm arrangement 3. The rotary sensor arrangement 1 shown in figure 2 comprises a sensor arm member 15 with a base 17 arranged about the axis of rotation 13 of the pivot shaft 9 of the pivoting arm arrangement 3. The rotary sensor arrangement 1 further comprises a sensor device 21, a sensor element 23 and a housing 53 covering the rotary sensor arrangement 1. The sensor arm member 15 further comprises an arm 19, extending out from the base 17 to be aligned and rotationally fixed to the pivoting arm member 7 of the pivoting arm arrangement 3. In this example the arm 19 is rotationally fixed to the pivoting arm member 7 by means of a fixating shaft 57, which is attached to a hole 59 in the pivoting arm member 7 and being arranged to fit a recess 61 in the arm 19. Thereby the pivoting of the pivoting arm member 7 moves the arm 19 of the sensor arm member 15 when pivoting occurs. The recess 61 of the arm allows for degrees of movement of the sensor arm member 15 in a direction along the extending direction of the sensor arm member 15 while still being fixed rotationally to the pivoting arm member 7. This is beneficial as the mounting of the rotary sensor arrangement 1 is easier to perform and that the risk of mechanical failure due to potential vibrations from the pivoting arm arrangement 3 is lowered. The base 17 of the sensor arm member 15 is coupled to the fixed arm member 5 by means of an adaptor element 25 and an intermediate connecting element 47. As will be described with reference to figures 3a-d, the adaptor element 25 may have a different design to fit to pivoting arm arrangements 3 of different designs. In this example the adaptor element 25 is a disc-like element, arranged to an end portion 11 of the pivot shaft 9. As is seen in figure 2, the pivot shaft 9 not provided with a rotary sensor arrangement 1 comprises a disc-shaped fastening element 63 which is attached to the end portion 11 of the pivot shaft 1 by means of a screw to lock the pivot shaft 9 axially. The adaptor element 25 according to figure 2 may therefore easily replace said fastening element 63 when the rotary sensor arrangement 1 is mounted to the pivoting arm arrangement 3. As a means to achieve a good fitting of the adaptor element 25, an additional element 37 such as a seal ring is also provided between the adaptor element 25 and the fixed arm member 5. This allows for larger tolerances with regards to the fitting of the adaptor element 25 to the pivoting arm arrangement 3. The intermediate connecting element 47 shown in this example is in the form of a bushing, which allows for pivoting of the sensor arm member 15 with regards to the adaptor element 25 while still providing a good fitting of the two. Said connecting element 47 may also instead be a bearing or similar to provide a smooth relative rotation of the sensor arm members 5, 7. The connecting element 47 is fitted into a hole 45 within the base 17 of the sensor arm member15 to provide a reliable fitting of the sensor arm member 15 to the adaptor element 25, wherein the sensor element 23 of the rotary sensor arrangement 1 may be rotated within said hole 45 and bushing. As also shown in figure 2, the rotary sensor arrangement 1 comprises a screw 33 with an integrated sensor element 23, which in this case is a magnet producing a magnetic field. Said screw 33 shown in this example is meant to replace the screw holding the fastening element 63 attached to the end portion 11 of the pivot shaft 9 before the rotary sensor arrangement 1 is mounted. The screw 33 may also be arranged to be threaded into the adaptor element 25 wherein a separate additional screw is used to attach the adaptor element 25 to the fixed arm member 5. The rotary sensor arrangement 1 further comprises a sensor device 21, which is arranged fixedly to the base 17 of the sensor arm member 15 to follow the rotation movement of said base 17 when the pivoting arm arrangement 3 pivots. The sensor device 21 of this example comprises two Hall sensors, embedded within the sensor device 21. The two Hall sensors are arranged to read the changes in the magnetic field when the sensor element 23 in form of a magnet rotates as a result of pivoting of the pivoting arm arrangement 3. The two Hall sensors thereby provide a reliable and redundant reading of the sensor element 23. To protect the sensor device 21 and the moving parts within the rotary sensor arrangement 1, a housing 53 is arranged to cover the arrangement 1. The housing 53 is easily attached to the rest of the rotary sensor arrangement 1 by means of screws or similar other suitable fastening elements. As should be obvious from figure 2, the rotary sensor arrangement 1 illustrated therein may easily be mounted to the pivoting arm arrangement 3 without the need to replace or remove the pivot shaft 9. This is beneficial as the rotary sensor arrangement may thus be attached to a vehicle comprising a pivoting arm arrangement as depicted in figure 2 at any given time, and is not reliant on being implemented during a manufacturing process of said vehicle.

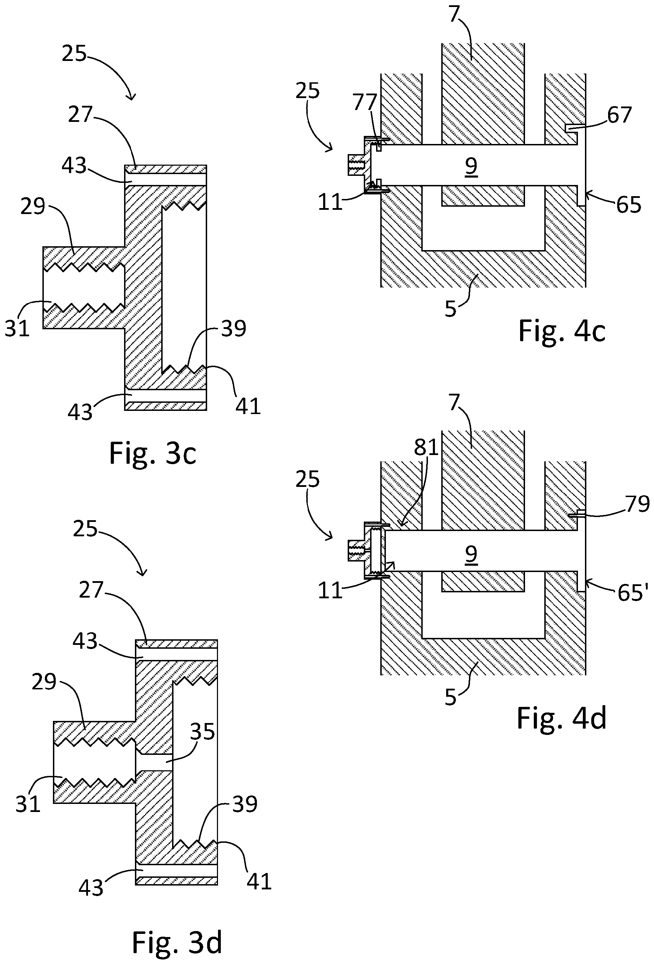

Figure 3 a-d shows cross-sectional schematic illustrations of adaptor elements 25 with varying designs. As will be illustrated by these various designs, the rotary sensor arrangement 1 according to the invention is possible to mount to pivoting arm arrangements 3 in a plurality of ways due to the flexibility of the adaptor element 25 and its various embodiments which are also easy to modify if needed. This provides a very versatile rotary sensor arrangement 1. The pivoting arm arrangements 3 for which the rotary sensor arrangement 1 may be mounted to may as said vary in design. However, as the rotary sensor arrangement 1 is primarily meant for pivoting arm arrangements 3 for heavy vehicles such as tractors, some common features are generally in place for such pivoting arm arrangement 3 wherein the adaptor element 25 and its mounting is designed with this in mind. Two such common features are apparent for the connection of the pivot arms 5, 7 to the pivot shaft 9. As heavy loads and operations are to be considered, two things are generally taken for granted, being that the pivot shaft 9 needs to be rotationally locked to one of the pivot arms and that it needs to be axially locked to prevent the pivot shaft from dislodging from the pivoting arm arrangement 3. The manner in which the pivot shaft 9 is axially and rotationally locked may vary however, and the adaptor element 25 is hence designed to work for a plurality of these variations. Figure 4a-d shows cross-sectional schematic illustrations of pivoting arm arrangements 3 with pivot shafts 9 of said various designs and the fitting of the adaptor elements 25 of figures 3a-d will herein be explained with reference to the examples of figures 4a-d. As should be obvious, the rotary sensor arrangement 1 is easily mounted to the adaptor element 25 in the exampled below. However, only the adaptor elements 25 are shown in these figures. It should also be noted that the figures 3a-d and the figures 4a-d are not to scale compared to each other and are only to be viewed as schematic illustrations.

Figure 3a show a cross-sectional schematic illustration of an adaptor element 25 which primarily is meant to be mounted to an end portion 11 of a pivot shaft 9 as depicted in figure 4a. The pivot shaft 9 of 4a is arranged between a branched fixed arm member 5 and an intermediate pivoting arm member 7 of a pivoting arm arrangement 3. The pivot shaft 9 is situated in a recess 65 in the fixed arm member 5, wherein the pivot shaft 9 comprises a projection 67 which is arranged to fit into the shape of said recess 65 at a specific angle of orientation of the pivot shaft 9. The pivot shaft 9 further comprises threads 69, arranged at the end portion 11 of the pivot shaft 9. Said threads 69 are meant to receive a threaded locking element (not shown) to axially lock the pivot shaft 9 in the arrangement 3. The adaptor element 25 of figure 3a is an essentially disc shaped element comprising a circumferential flange 27 and an end portion 29 with a threaded recess 31. The circumferential flange 27 further comprises inner threads 39, arranged at an inner circumference 41 of the circumferential flange 27, wherein the inner threads 39 are arranged to be threaded to the pivot shaft 9. Hence the threaded locking element is easily replaced with the adaptor element 25 to establish a connection between the adaptor element 25 and the end portion 11 of the pivot shaft 9. The sensor element (not shown) being integrated in a screw is then threaded into the threaded recess 31 of the end portion 29 of the adaptor element 25 to establish the mounting of the sensor element to the fixed arm member 5 by means of the adaptor element 25. The adaptor element 25 will thus act as both an axially locking element of the pivot shaft 9 and as a means of holding the sensor element in place within the rotary sensor arrangement. If the diameter of the end portion of the pivot shaft and the diameter of the threads of the inner circumference are not matched, and the diameter of the pivot shaft 9 is smaller than the inner circumference 41, an additional adaptor element (not shown) may further be used. Such an additional adaptor element may be shaped essentially like a washer, and being threaded on both an inside, arranged to fit the pivot shaft 9, and on an outside, arranged to fit the adaptor element 25. Thereby a non-fit situation is easily solved by means of a very simple and easy to produce additional adaptor element.

Figure 3b show a cross-sectional schematic illustration of an adaptor element 25 which primarily is meant to be mounted to an end portion 11 of a pivot shaft 9 as depicted in figure 4b. The pivot shaft 9 of 4b is arranged between a branched fixed arm member 5 and an intermediate pivoting arm member 7 of a pivoting arm arrangement 3. The pivot shaft 9 is situated in a recess 65 in the fixed arm member 5, wherein the pivot shaft 9 comprises a projection 67 which is arranged to fit into the shape of said recess 65 at a specific angle of orientation of the pivot shaft 9. The pivot shaft 9 of figure 4b further comprises a threaded hole 71, arranged at the end portion 11 of the pivot shaft 9. Said threaded hole 71 is meant to receive a screw 73, holding a locking element (not shown) in place to axially lock the pivot shaft 9 in the arrangement 3. The adaptor element 25 of figure 3b is an essentially disc shaped element comprising a circumferential flange 27 and an end portion 29 with a threaded recess 31. The circumferential flange 27 further comprises inner threads 39, arranged at an inner circumference 41 of the circumferential flange 27. Even further the adaptor element 25 of figure 3b comprises a through hole 35, extending from the threaded recess 31 through the adaptor element 25. Said through hole 35 is arranged to receive the screw 73 meant for holding the locking element to axially lock the pivot shaft 9. Hence the locking element held in place with a screw 73 is easily replaced with the adaptor element 25 to establish a connection between the adaptor element 25 and the end portion 11 of the pivot shaft 9. The sensor element (not shown) being integrated in a screw is then threaded into the threaded recess 31 of the end portion 29 of the adaptor element 25 to establish the mounting of the sensor element to the fixed arm member 5 by means of the adaptor element 25. The adaptor element 25 will thus act as both an axially locking element of the pivot shaft 9 and as a means of holding the sensor element in place within the rotary sensor arrangement 1.

Figure 3c show a cross-sectional schematic illustration of an adaptor element 25 which primarily is meant to be mounted to an end portion 11 of a pivot shaft 9 as depicted in figures 4c and/or 4d. The pivot shaft 9 of 4c is arranged between a branched fixed arm member 5 and an intermediate pivoting arm member 7 of a pivoting arm arrangement 3. The pivot shaft 9 is situated in a recess 65 in the fixed arm member 5, wherein the pivot shaft 9 comprises a projection 67 which is arranged to fit into the shape of said recess 65 at a specific angle of orientation of the pivot shaft 9. The pivot shaft 9 of figure 4c further comprises a circumferential recess 77, arranged at an end portion 11 of the pivot shaft 9. Said circumferential recess 77 is meant to receive a locking ring (not shown), to axially lock the pivot shaft 9 in the arrangement 3.

The pivot shaft 9 of figure 4d is also arranged between a branched fixed arm member 5 and an intermediate pivoting arm member 7 of a pivoting arm arrangement 3. The pivot shaft 9 of 4d is also situated in a recess 65' in the fixed arm member 5, but to the contrary compared to the pivot shaft 9 of figures 4a-c, the pivot shaft 9 is not rotationally locked by means of a the fitting of a projection within said recess. The pivot shaft 9 of figure 4d is instead both axially and rotationally locked to the pivoting arm arrangement 3 by means of a screw 79, arranged through the pivot shaft 9 into the fixed arm member 5. The pivot shaft 9 of figure 4d is shown to not extend fully through the opposite side of the branched fixed arm member 5, but is instead situated in a recess 81 in said fixed arm member 5. The pivot shaft 9 according to this example could however extend through a hole, replacing the recess 81, as is shown in for example figure 4c. The pivot shaft 9 as depicted in figure 4d is meant to illustrate that the mounting of the adaptor element 25 according to figure 3c is not dependent on abutment of the adaptor element 25 to the end portion 11 of the pivot shaft 9.

The adaptor element 25 of figure 3c is an essentially disc shaped element comprising a circumferential flange 27 and an end portion 29 with a threaded recess 31. The circumferential flange 27 further comprises inner threads 39, arranged at an inner circumference 41 of the circumferential flange 27. Even further the adaptor element 25 of figure 3c comprises a plurality of holes 43, arranged in the flange 27 of the adaptor element 25. Said holes 43 are arranged to receive additional fastening elements such as screws for mounting the adaptor element 25 to the fixed arm member 5. Such an operation is easily performed by drilling additional holes into the fixed arm member 5 wherein screws may be inserted into said holes to establish a connection between the adaptor element 25 and the fixed arm member 5. The sensor element (not shown) being integrated in a screw is then threaded into the threaded recess 31 of the end portion 29 of the adaptor element 25 to establish the mounting of the sensor element to the fixed arm member 5 by means of the adaptor element 25.

Figure 3d show a cross-sectional schematic illustration of an adaptor element 25 according to another example of the invention. This embodiment of the adaptor element 25 comprises a combination of the features described with reference to figures 3a-c. Thus, the adaptor element 25 shown in figure 3d may be mounted to each of the pivot shafts 9 and/or fixed arm members 5 of figures 4a-d. Hence, the adaptor element 25 provides a very adaptable and flexible rotary sensor arrangement 1, being possible to mount to a pivoting arm arrangement 3 in a variety of ways and to a wide variety of pivoting arm arrangements 3 having different designs. As there is also no need to remove or replace the pivot shaft 9 from the pivoting arm arrangement 3, regardless of its design, post-assembly mounting of the rotary sensor arrangement 1 is possible which is very beneficial as both newly manufactured and old pivoting arm arrangements 3, and/or vehicles with such arrangements may be provided with rotary sensor arrangements 1 according to the invention if needed. The adaptor element 25 may be made of a metallic material, wherein it may be casted or moulded, or machined for a in a variety of pre-made models in a fast and cost effective manner. The adaptor element 25 may also be made of a polymer material wherein it can be casted or moulded in a variety of pre-made models in a fast and cost effective manner. As the adaptor element 25 is a purely mechanical element and do not comprise any of the electronic or control devices of the sensor arrangement 1, having a plurality of adaptor element 25 designs is cheaper and easier to manufacture and maintain for mounting and/or maintenance compared to if the entirety of the rotary sensor arrangement 1 would need to be modified to conform to a pivoting arm arrangement 3 of a new design.

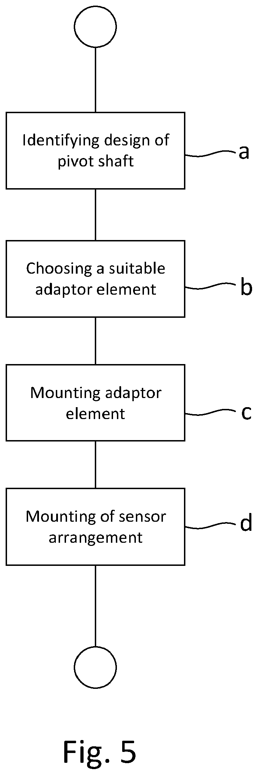

Figure 5 shows a flowchart of a method for mounting a rotary sensor arrangement 1 to a pivoting arm arrangement 3 according to the invention. The pivoting arm arrangement 3 to which the rotary sensor arrangement 1 is to be mounted is according to the method a pivoting arm arrangement 3 which comprises at least one fixed arm member 5 and at least one pivoting arm member 7, each pivoting arm member 7 being arranged to pivot about a pivot shaft 9, which is rotationally fixed to a fixed arm member 5. The design parameters of the pivot shaft 9 is however unknown prior to the mounting method being performed, but could be in the form of a pivot shaft 9 in accordance with any of the examples described with reference to figures 4a-d, or other but similar. The rotary sensor arrangement 1 being mounted comprises a sensor arm member 15 comprising a base 17 and an arm 19, the base 17 being arranged to pivot about the pivot shaft 9 wherein the arm 19, extending away from the base 17 is rotationally coupled to the pivoting arm member 7. The rotary sensor arrangement 1 further comprises at least one sensor device 21 arranged at the base 17 of the sensor arm member 15, and a sensor element 23, to be arranged rotationally fixed to the fixed arm member 5 along an axis of rotation 13 extending through the elongation of a centre of the pivot shaft 9 by means of an adaptor element 25. The at least one sensor device 21 is arranged to read the relative rotational displacement of the sensor element 23 with regards to the sensor device 21 in a non-contact manner. The method according to the invention comprises the steps of: a) identifying the specific design of the pivot shaft 9 of the pivoting arm arrangement 3, b) choosing an adaptor element 25 with a design suitable for the identified design of the pivot shaft 9, c) mounting the adaptor element 25 to the pivot shaft 9, and d) mounting the additional elements of the rotary sensor arrangement 1 to the adaptor element 25. Step a) is thus performed to obtain information regarding the pivot shaft 9 of the pivoting arm arrangement. The result of step a) may therefore be a design as described in any of figures 4a-d, or similar. Step b) is then performed by selecting a suitable adaptor element 25, which may be any of the adaptor elements 25 described with reference to figures 3a-c, if the pivot shaft 9 is identified as any of the corresponding pivot shafts 9 of figures 4a-d. An adaptor element 25 such as exemplified in figure 3d may also be used to be able to be mounted to the pivot shaft 9, or the fixed arm member 5, in various ways. Step c) is then performed to establish an attachment of the adaptor element 25 with the pivot shaft 9, or if no end portion 11 of a pivot shaft 9 is extending out from the fixed arm member 5, to the fixed arm member 5. Lastly, the additional elements of the rotary sensor arrangement 1 are mounted to the adaptor element 25. As should be obvious the method according to the invention is thereby possible to perform both during and post production and/or assembly of a pivoting arm arrangement 3, and no modification are needed to perform on the pivot shaft 9 or the pivoting arm arrangement 3, providing a flexible and cost effective method of mounting a rotary sensor arrangement 1 to a pivoting arm arrangement 3.

As should be obvious for a person skilled in the art, the different examples of the mounting device and its individual parts described herein can be combined in various ways within the scope of the protection set up by the enclosed patent claims.

## Claims

1. A rotary sensor arrangement (1) for mounting to a pivot arm arrangement (3), which comprises a fixed arm member (5) and a pivoting arm member (7), the pivoting arm member (7) being arranged to pivot about a pivot shaft (9), which is rotationally fixed to the fixed arm member (5), the rotary sensor arrangement (1) is arranged to be mounted at an end portion (11) of the pivot shaft (9), the sensor arrangement (1) comprising a sensor arm member (15) comprising a base (17) and an arm (19), the base (17) being arranged to rotate about the pivot shaft (9) wherein the arm (19), extending away from the base (17) is rotationally coupled to the pivoting arm member (7), at least one sensor device (21) arranged at the base (17) of the sensor arm member (15), and a sensor element (23), arranged rotationally fixed to the fixed arm member (5) along an axis of rotation (13) extending through the elongation of a centre of the pivot shaft (9),
**characterized in that**
the rotary sensor arrangement (1) further comprises an adaptor element (25), wherein the sensor element (23) is attached rotationally fixed to the axis of rotation (13) by means said adaptor element (25), and that the at least one sensor device (21) is arranged to read the relative rotational displacement of the sensor element (23) with regards to the sensor device (21) in a non-contact manner.

2. The rotary sensor arrangement (1) according to claim 1, wherein the adaptor element (25) is an essentially disc shaped element comprising a circumferential flange (27) and an end portion (29) with a threaded recess (31) and wherein the sensor element (23) is integrated in a screw (33), which is arranged to be threaded to the threaded recess (31).

3. The rotary sensor arrangement (1) according to claim 2, wherein the circumferential flange (27) comprises inner threads (39), arranged at an inner circumference (41) of the circumferential flange (27), wherein the inner threads (39) are arranged to be threaded to the pivot shaft (9).

4. The rotary sensor arrangement (1) according to any of claims 2 or 3, wherein the circumferential flange (27) further comprises a plurality of holes (43), through which additional fastening elements may be used for attaching the adaptor element (25) to the fixed arm member (5).

5. The rotary sensor arrangement (1) according to any of the preceding claims, wherein the base (17) of the sensor arm member (15) further comprises a hole (45) in which the sensor element (23) may be situated and rotate freely within said hole (45).

6. The rotary sensor arrangement (1) according to claim 5, wherein the adaptor element (25) is coupled to the hole (45) of the sensor arm member (15) by means of a connecting element (47).

7. The rotary sensor arrangement (1) according to any of the preceding claims, wherein the at least one sensor device (21) is at least one Hall sensor and the sensor element (23) comprises at least one magnet for providing a magnetic field, wherein the Hall sensor utilizes changes in said magnetic field to attain the relative rotational displacement of the sensor device (21) in relation to the sensor element (23).

8. The rotary sensor arrangement (1) according to any of claims 1-6, wherein the at least one sensor device (21) is at least one optical sensor and the sensor element (23) comprises a plurality of markers, wherein the optical sensor utilizes said markers to attain the relative rotational displacement of the sensor device (21) in relation to the sensor element (23).

9. A pivoting arm arrangement (3), such as an implement for a tractor, comprising at least one fixed arm member (5) and at least one pivoting arm member (7), each pivoting arm member (7) being arranged to pivot about a pivot shaft (9), which is rotationally fixed to a fixed arm member (5), **characterized in that** the pivot arm arrangement (3) further comprises at least one rotary sensor arrangement (1) according to any of claims 1-8.

10. A heavy vehicle (49), such as a tractor, **characterized in that** it comprises a pivoting arm arrangement (3) according to claim 9.

11. A method for mounting a rotary sensor arrangement (1) to a pivoting arm arrangement (3), which comprises at least one fixed arm member (5) and at least one pivoting arm member (7), each pivoting arm member (7) being arranged to pivot about a pivot shaft (9), which is rotationally fixed to a fixed arm member (5), the sensor arrangement (1) comprising a sensor arm member (15) comprising a base (17) and an arm (19), the base (17) being arranged to rotate about a pivot shaft (9) wherein the arm (19), extending away from the base (17) is rotationally coupled to a pivoting arm member (7), at least one sensor device (21) arranged at the base (17) of the sensor arm member (15), and a sensor element (23), to be arranged rotationally fixed to the fixed arm member (5) along an axis of rotation (13) extending through the elongation of a centre of the pivot shaft (9) by means of an adaptor element (25), wherein the at least one sensor device (21) is arranged to read the relative rotational displacement of the sensor element (23) with regards to the sensor device (21) in a non-contact manner, wherein the method comprises the steps of:
a) identifying the specific design of the pivot shaft (9) of the pivoting arm arrangement (3),
b) choosing an adaptor element (25) with a design suitable for the identified design of the pivot shaft (9),
c) mounting the adaptor element (25) to the pivot shaft (9), and
d) mounting the additional elements of the rotary sensor arrangement (1) to the adaptor element (25).

## Patentansprüche

1. Drehsensoranordnung (1) zur Montage an einer Schwenkarmanordnung (3), die ein fixiertes Armelement (5) und ein Schwenkarmelement (7) umfasst, wobei das Schwenkarmelement (7) zum Schwenken um eine am fixierten Armelement (5) drehbar fixierte Schwenkwelle (9) ausgelegt ist, die Drehsensoranordnung (1) zur Montage an einem Endabschnitt (11) der Schwenkwelle (9) ausgelegt ist, die Sensoranordnung (1) umfassend ein Sensorarmelement (15) umfassend ein Basisteil (17) und einen Arm (19), wobei das Basisteil (17) zum Drehen um die Schwenkwelle (9) ausgelegt ist, wobei der Arm (19), der sich weg vom Basisteil (17) erstreckt, mit dem Schwenkarmelement (7) drehbar verbunden ist, mindestens eine am Basisteil (17) des Sensorarmelements (15) angeordnete Sensoranordnung (21), und ein Sensorelement (23), das entlang einer Drehachse (13), die sich über die Länge einer Mitte der Schwenkwelle (9) erstreckt, an dem fixierten Armelement (5) drehfest angeordnet ist,
**dadurch gekennzeichnet, dass**
die Drehsensoranordnung (1) ferner ein Adapterelement (25) umfasst, wobei das Sensorelement (23) mittels des Adapterelements (25) an der Drehachse (13) drehfest befestigt ist, und dass die mindestens eine Sensoranordnung (21) ausgelegt ist, um die relative Drehverschiebung des Sensorelements (23) bezüglich der Sensoranordnung (21) in einer nicht berührenden Weise angeordnet ist.

2. Drehsensoranordnung (1) nach Anspruch 1, wobei das Adapterelement (25) ein im Wesentlichen scheibenförmiges Element ist, das einen umfänglichen Flansch (27) und einen Endabschnitt (29) mit einer Gewindeaussparung (31) umfasst, und wobei das Sensorelement (23) in einer Schraube (33) eingebettet ist, die zum Einschrauben in die Gewindeaussparung (31) ausgelegt ist.

3. Drehsensoranordnung (1) nach Anspruch 2, wobei der umfängliche Flansch (27) Innengewinde (39) umfasst, die an einem Innenumfang (41) des umfänglichen Flansches (27) angeordnet ist, wobei die Innengewinde (39) zum Einschrauben in die Schwenkwelle (9) ausgelegt ist.

4. Drehsensoranordnung (1) nach einem der Ansprüche 2 oder 3, wobei der umfängliche Flansch (27) ferner eine Mehrzahl von Löchern (43) umfasst, durch welche zusätzliche Befestigungselemente zur Befestigung des Adapterelements (25) an dem fixierten Armelement (5) verwendet werden können.

5. Drehsensoranordnung (1) nach einem der vorgehenden Ansprüche, wobei das Basisteil (17) des Sensorarmelements (15) ferner ein Loch (45) umfasst, in welchem das Sensorelement (23) angeordnet sein kann und innerhalb des Lochs (45) frei drehen kann.

6. Drehsensoranordnung (1) nach Anspruch 5, wobei das Adapterelement (25) mittels eines Verbindungselements (47) mit dem Loch (45) des Sensorarmelements (15) verbunden ist.

7. Drehsensoranordnung (1) nach einem der vorgehenden Ansprüche, wobei die mindestens eine Sensoranordnung (21) zumindest ein Hall-Sensor ist, und das Sensorelement (23) mindestens einen Magneten zur Erzeugung eines Magnetfeldes umfasst, wobei der Hall-Sensor Änderungen in dem Magnetfeld verwendet, um die relative Drehverschiebung der Sensoranordnung (21) relativ zum Sensorelement (23) zu erreichen.

8. Drehsensoranordnung (1) nach einem der Ansprüche 1-6, wobei die mindestens eine Sensoranordnung (21) mindestens ein optischer Sensor ist, und das Sensorelement (23) eine Mehrzahl von Markern umfasst, wobei der optische Sensor die Marker verwendet, um die relative Drehverschiebung der Sensoranordnung (21) relativ zum Sensorelement (23) zu erreichen.

9. Schwenkarmanordnung (3), wie beispielsweise ein Arbeitsgerät für einen Traktor, umfassend zumindest ein fixiertes Armelement (5) und zumindest ein Schwenkarmelement (7), wobei jedes Schwenkarmelement (7) zum Schwenken um eine an einem fixierten Armelement (5) drehbar fixierte Schwenkwelle (9) ausgelegt ist, **dadurch gekennzeichnet, dass** die Schwenkarmanordnung (3) ferner mindestens eine Drehsensoranordnung (1) nach einem der Ansprüche 1-8 umfasst.

10. Schweres Fahrzeug (49), wie beispielsweise ein Traktor, **dadurch gekennzeichnet, dass** er eine Schwenkarmanordnung (3) nach Anspruch 9 umfasst.

11. Verfahren zur Montage einer Drehsensoranordnung (1) an einer Schwenkarmanordnung (3), die mindestens ein fixiertes Armelement (5) und mindestens ein Schwenkarmelement (7) umfasst, wobei jedes Schwenkarmelement (7) zum Schwenken um eine an einem fixierten Armelement (5) drehbar fixierte Schwenkwelle (9) ausgelegt ist, die Sensoranordnung (1) umfassend ein Sensorarmelement (15) umfassend ein Basisteil (17) und einen Arm (19), wobei das Basisteil (17) zum Drehen um eine Schwenkwelle (9) ausgelegt ist, wobei der Arm (19), der sich weg vom Basisteil (17) erstreckt, mit dem Schwenkarmelement (7) drehbar verbunden ist, mindestens eine Sensoranordnung (21), die am Basisteil (17) des Sensorarmelements (15) angeordnet ist, und ein Sensorelement (23) zum drehfesten Anordnen an dem fixierten Armelement (5) entlang einer Drehachse (13), die sich über die Länge einer Mitte der Schwenkwelle (9) mittels eines Adapterelements (25) erstreckt, wobei die mindestens eine Sensoranordnung (21) ausgelegt ist, um die relative Drehverschiebung des Sensorelements (23) bezüglich der Sensoranordnung (21) in einer nicht berührenden Weise abzulesen, wobei das Verfahren die folgenden Schritte umfasst:
a) Identifizieren der spezifischen Ausgestaltung der Schwenkwelle (9) der Schwenkarmanordnung (3),
b) Auswählen eines Adapterelements (25) mit einer Ausgestaltung, die für die identifizierte Ausgestaltung der Schwenkwelle (9) geeignet ist,
c) Montage des Adapterelements (25) an der Schwenkwelle (9), und
d) Montage der zusätzlichen Elemente der Drehsensoranordnung (1) an dem Adapterelement (25).

## Revendications

1. Agencement de capteur rotatif (1) destiné à être monté sur un agencement de bras pivotant (3) qui comprend un élément de bras fixe (5) et un élément de bras pivotant (7), l'élément de bras pivotant (7) étant agencé pour pivoter autour d'un arbre de pivot (9) qui est fixé en rotation à l'élément de bras fixe (5), le dispositif de capteur rotatif (1) étant agencé pour être monté à une partie d'extrémité (11) de l'arbre de pivot (9), l'agencement de capteur (1) comprenant un élément de bras de capteur (15) comprenant une base (17) et un bras (19), la base (17) étant agencée pour tourner autour de l'arbre de pivot (9), dans lequel le bras (19) s'étendant à l'écart de la base (17) est couplé en rotation à l'élément de bras pivotant (7), au moins un dispositif capteur (21) agencé à la base (17) de l'élément de bras de capteur (15), et un élément capteur (23), disposé en rotation à l'élément de bras fixe (5) le long d'un axe de rotation (13) s'étendant à travers l'allongement d'un centre de l'arbre de pivot (9),
**caractérisé en ce que**
l'agencement de capteur rotatif (1) comprend en outre un élément adaptateur (25), dans lequel l'élément capteur (23) est fixé en rotation fixe à l'axe de rotation (13) au moyen dudit élément adaptateur (25), et que l'au moins un dispositif capteur (21) est agencé pour lire le déplacement de rotation relatif de l'élément capteur (23) par rapport au dispositif capteur (21) d'une manière sans contact.

2. Agencement de capteur rotatif (1) selon la revendication 1, dans lequel l'élément capteur (25) est un élément essentiellement en forme de disque comprenant une bride circonférentielle (27) et une partie d'extrémité (29) avec un évidement fileté (31), et dans lequel l'élément capteur (23) est intégré dans une vis (33) qui est agencée pour être enfilée dans l'évidement fileté (31).

3. Agencement de capteur rotatif (1) selon la revendication 2, dans lequel la bride circonférentielle (27) comprend des filets intérieurs (39), disposés au niveau d'une circonférence intérieure (41) de la bride circonférentielle (27), les filetages intérieurs (39) étant agencés pour être vissés sur l'arbre de pivot (9).

4. Agencement de capteur rotatif (1) selon l'une quelconque des revendications 2 ou 3, dans lequel la bride circonférentielle (27) comprend en outre une pluralité de trous (43), à travers lesquels des éléments de fixation supplémentaires peuvent être utilisés pour fixer l'élément adaptateur (25) à l'élément de bras fixe (5).

5. Agencement de capteur rotatif (1) selon l'une quelconque des revendications précédentes, dans lequel la base (17) de l'élément de bras de capteur (15) comprend en outre un trou (45) dans lequel l'élément capteur (23) peut être situé et tourner librement à l'intérieur dudit trou (45).

6. Agencement de capteur rotatif (1) selon la revendication 5, dans lequel l'élément adaptateur (25) est couplé au trou (45) de l'élément de bras de capteur (15) au moyen d'un élément de raccord (47).

7. Agencement de capteur rotatif (1) selon l'une quelconque des revendications précédentes, dans lequel l'au moins un dispositif capteur (21) est au moins un capteur à effet Hall, et l'élément capteur (23) comprend au moins un aimant pour fournir un champ magnétique, le capteur à effet Hall utilisant des changements dans ledit champ magnétique pour atteindre le déplacement rotationnel relatif du dispositif capteur (21) par rapport à l'élément capteur (23).

8. Agencement de capteur rotatif (1) selon l'une quelconque des revendications 1 à 6, dans lequel l'au moins un dispositif capteur (21) est au moins un capteur optique, et l'élément capteur (23) comprend une pluralité de marqueurs, le capteur optique utilisant lesdits marqueurs pour atteindre le déplacement de rotation relatif du dispositif capteur (21) par rapport à l'élément capteur (23).

9. Agencement de bras pivotant (3), tel qu'un outil pour tracteur, comprenant au moins un élément de bras fixe (5) et au moins un élément de bras pivotant (7), chaque élément de bras pivotant (7) étant agencé pour pivoter autour d'un arbre de pivot (9) qui est fixé en rotation à un élément de bras fixe (5), **caractérisé en ce que** l'agencement de bras de pivot (3) comprend en outre au moins un agencement de capteur rotatif (1) selon l'une quelconque des revendications 1 à 8.

10. Véhicule lourd (49), tel qu'un tracteur, **caractérisé en ce qu'il** comprend un agencement de bras pivotant (3) selon la revendication 9.

11. Procédé de montage d'un agencement de capteur rotatif (1) à un agencement de bras pivotant (3) qui comprend au moins un élément de bras fixe (5) et au moins un élément de bras pivotant (7), chaque élément de bras pivotant (7) étant agencé pour pivoter autour d'un arbre de pivot (9) qui est fixé en rotation à un élément de bras fixe (5), l'agencement de capteur (1) comprenant un élément de bras de capteur (15) comprenant une base (17) et un bras (19), la base (17) étant agencée pour tourner autour d'un arbre de pivot (9), dans lequel le bras (19) s'étendant à l'écart de la base (17) est couplé en rotation à l'élément de bras pivotant (7), au moins un dispositif capteur (21) agencé à la base (17) de l'élément de bras de capteur (15), et un élément capteur (23), à disposer en rotation fixe à l'élément de bras fixe (5) le long d'un axe de rotation (13) s'étendant à travers l'allongement d'un centre de l'arbre de pivot (9) au moyen d'un élément adaptateur (25), l'au moins un dispositif capteur (21) est agencé pour lire le déplacement de rotation relatif de l'élément capteur (23) par rapport au dispositif capteur (21) d'une manière sans contact, le procédé comprenant les étapes consistant à :
a) identifier la conception spécifique de l'arbre de pivot (9) de l'agencement de bras pivotant (3),
b) choisir un élément adaptateur (25) avec une conception adaptée à la conception identifiée de l'arbre de pivot (9),
c) monter l'élément adaptateur (25) sur l'arbre de pivot (9), et
d) monter les éléments supplémentaires de l'agencement de capteur rotatif (1) sur l'élément adaptateur (25).
